# FASCICULE DE BREVET EUROPEEN

(11) **EP 0 243 233 B1**
(45) Date de publication et mention de la délivrance du brevet: **16.06.1993**
(21) Numéro de dépôt: 87400796.6
(22) Date de dépôt: 09.04.1987
(51) Int. Cl.: C08F 255/02, C08F 291/18, C09D 151/06, C09J 151/06

(54) **Résines à base de polyéthylène, leur procédé de préparation et leur application comme liant dans les revêtements**
Harze aus Polyäthylen, ihr Herstellungsverfahren und Verwendung als Farbbindemittel
Resins based on polyethylene, their preparation and use as paint binders

(30) Priorité: 22.04.1986 FR 8605779
(43) Date de publication de la demande: 28.10.1987
(73) Titulaire: ELF ATOCHEM S.A., 92800 Puteaux (FR)
(72) Inventeur: Aubry, Jean, F-62400 Bethune (FR); Hauschild Rémi, F-75013 Paris (FR); Nicco, Adrien, F-62400 Bethune (FR)
(74) Mandataire: Chaillot, Geneviève

(56) Documents cités:
- EP-A- 0 081 442
- BE-A- 562 661
- FR-A- 1 177 898
- GB-A- 1 132 894
- US-A- 3 342 900

## Description

La présente invention concerne des résines à base de polyéthylène oxydé qui sont, selon le cas, thermoplastiques ou thermodurcissables, solubles dans des solvants organiques et/ou les milieux aqueux, qui sont utilisées comme liant pour revêtement notamment dans les peintures, les vernis, les encres, les colles, les adhésifs et les joints.

On connait différentes catégories de polymères à base de polyéthylène. Parmi ceux-ci, sont connus les polymères greffés à base de polyéthylène, dans lesquels on retrouve les caractéristiques physiques et chimiques et les propriétés du polyéthylène d'origine. Ainsi les polyéthylènes greffés connus sont, comme le polyéthylène d'origine, insolubles dans les solvants organiques tels que les alcools, les esters, les éthers ou les cétones et insolubles dans les milieux aqueux.

Différents procédés de préparation de ces polyéthylènes greffés sont actuellement connus.

Selon le brevet français 1 130 100 et le brevet américain US 2 987 501, on soumet des feuilles, des granulés ou des poudres de polyéthylène de haut poids moléculaire à une opération d'oxydation, par exemple à l'aide d'un rayonnement ionisant et d'oxygène. Le greffage du polyéthylène oxydé ainsi obtenu est ensuite effectué par la mise en contact de ce dernier avec un mélange de monomères catalysés, par exemple par calendrage, ou encore à chaud en soumettant le polyéthylène oxydé qui est à l'état de feuilles ou de poudres à une solution de monomères catalysés.

Le brevet anglais 1 132 894 décrit des cires de polyéthylène modifiées obtenues par réaction du polyéthylène oxydé avec des composés éthyléniquement insaturés contenant une double liaison terminale, des atomes d'oxygène, des groupes carboxyles ou sulfoniques et en faisant ensuite réagir le produit obtenu avec des composés organiques contenant de l'azote basique et/ou des sels métalliques.

Ces cires de polyéthylène modifiées sont utilisés comme additifs dans les polyoléfines dont ils améliorent la capacité de teinture.

Le brevet BE-A-562661 décrit des polymères greffés contenant plus de 30 % de polymère A de base et qui ne sont pas solubles dans des solvants organiques et/ou les milieux aqueux.

Les documents FR-A-1177 898 et US-A- 3342 900 ne divulguent pas l'utilisation de polymères à base de polyéthylène oxydé comme liants dans des peintures, vernis, colles, adhésifs et joints.

De même, dans le brevet DE-C- 1 908 620, on indique la préparation d'une résine thermoplastique, moulable et étirable, destinée à améliorer la coloration et la mise en oeuvre des polyoléfines, à partir de polyéthylène oxydé et de monomères vinyliques.

Les méthodes de préparation précitées aboutissent, parallèlement à la formation de polyéthylène greffé, à la formation d'une importante quantité d'homopolymères à base du ou des monomères utilisés. A ce sujet, on peut citer le brevet russe 715 585 qui indique un procédé de préparation de polyéthylène modifié émulsionnable préparé à partir de polyéthylène oxydé et d'acide acrylique. En effet, le produit obtenu contient des homopolymères à base d'acide acrylique ainsi que du polyéthylène oxydé n'ayant pas réagi.

Selon le brevet français 1 177 898, il est connu de préparer des polymères greffés en mettant en contact un polymère insaturé avec de l'ozone, puis en faisant réagir le polymère ozonisé obtenu avec un monomère de greffage susceptible d'être polymérisé par des radicaux libres. Dans le cas où le monomère de greffage est un solvant du polymère, on peut diluer le monomère avec un produit inerte qui n'est pas un solvant du polymère, afin d'empêcher la dissolution de ce dernier. Après réaction, le polymère greffé est séparé des monomères n'ayant pas réagi. Selon ce procédé, on obtient des polymères greffés modifiés qui sont comme les polymères de base sous la forme de pellicules ou de filaments, mais qui présentent des caractéristiques et des propriétés modifiées. De même, le brevet belge 562 661 décrit un procédé de préparation de copolymères greffés selon lequel on ozonise un polymère, plus on fait réagir le polymère ozonisé avec un monomère polymérisable par un mécanisme radicalaire. Ce procédé est utilisé pour traiter superficiellement des objets tels que des films, des poudres, des tuyaux et tous objets divers provenant de moulage ou d'autres procédés de fabrication.

Les procédés précités permettent uniquement la préparation de polyéthylènes modifiés, à savoir qu'ils possèdent des caractéristiques chimiques et physiques voisines du polyéthylène d'origine.

La présente invention concerne des résines à base de polyéthylène oxydé possédant des caractéristiques chimiques et physiques variées et différentes de celles du polyéthylène d'origine, à savoir des résines thermoplastiques ou thermodurcissables, solubles dans les solvants organiques et/ou les milieux aqueux.

Ces résines sont avantageuses à plus d'un titre.

Ces résines constituent tout d'abord une nouvelle gamme variée de résines à base de polyéthylène oxydé, solubles dans les solvants usuels tels que les alcools, esters, éthers ou cétones ou encore hydrodiluables qui peuvent être obtenues par un procédé simple de mise en oeuvre.

De plus, leurs qualités en font d'excellents liants pour revêtement.

Plus précisément, l'invention a pour objet l'utilisation de résines thermoplastiques ou thermodurcissables, solubles dans des solvants organiques et/ou les milieux aqueux, constituées par du polyéthylène greffé obtenu à partir de :
(a) 0,5 à 30% en poids d'au moins un polyéthylène oxydé, par rapport à la résine préparée, ledit polyéthylène oxydé ayant un poids moléculaire moyen en poids compris entre 900 et 25 000 et possédant des groupements latéraux terminés par des groupements fonctionnels susceptibles de donner naissance à des radicaux libres; et
(b) 70 à 99,5% en poids d'au moins un monomère acrylique et/ou méthacrylique, et, le cas échéant, d'au moins un autre monomère éthylénique,
comme liants dans des peintures, vernis, encres, colles, adhésifs et joints.

De préférence, on utilise des polyéthylènes oxydés émulsionnables possédant un poids moléculaire moyen en poids compris entre 1200 et 8000.

En particulier, le polyéthyléne greffé a été obtenu par dispersion du (ou des) polyéthylène(s) oxydé(s) sous forme de poudre ou de granulés dans au moins un solvant organique présentant une température d'ébullition supérieure à la zone de ramollissement du ou des polyéthylènes oxydés ; chauffage sous agitation de la dispersion ainsi obtenue à une température supérieure à la température de ramollissement du (ou des) polyéthylène(s) oxydé(s); puis ajout progressif du (ou des) monomère(s) catalysé(s) constitué(s) par le (ou les) monomère(s) (méth)acrylique(s) et, le cas échéant, le (ou les) autre(s) monomère(s) éthylénique(s), dans la phase homogène solvant-polyoxyéthylène oxydé fondu jusqu'à l'obtention de la résine.

Dans la suite de ce texte, dans un souci de simplification, on désignera par "polyéthylène oxydé (1)" le polyéthylène tel que mentionné ci-dessus qui possède lesdits groupements latéraux et par "polyéthylène" le polyéthylène avant son traitement aboutissant à la formation des groupements latéraux à l'origine de la formation des radicaux libres.

La formation de tels groupements latéraux est obtenue par des réactions classiques d'oxydation poussée du polyéthylène, à savoir sous pression, à des températures élevées et en présence d'un milieu oxydant. Ainsi, on peut faire réagir le polyéthylène en phase fondue avec de l'oxygène à une température comprise entre 100 et 250°C sous pression (voir brevet US 3 160 621). Ou encore, on peut soumettre du polyéthylène en poudre à de l'oxygène à une température comprise entre 100°C et la température de fusion du polyéthylène (voir brevet GB 971 998). L'oxydation peut être accélérée par l'utilisation d'un rayonnement ultra violet. On peut également oxyder le polyéthylène à l'aide d'ozone, ou l'irradier en présence d'air ou d'oxygène ou encore le soumettre à une opération de mastication en présence d'air et d'eau oxygénée.

Ces traitements d'oxydation entraînent successivement la rupture des chaînes de polyéthylène par rupture des liaisons -C-C- ou C-H, la formation d'hydropéroxydes, la dissociation en radicaux libres, la dégradation par un mécanisme de branchements et l'oxydation complémentaire des groupements aldéhydes et cétones, conduisent à des produits contenant des groupes hydroxyles, cétones, carboxyles et esters. Le polyéthylène oxydé ainsi obtenu est stable.

Les polyéthylène oxydés (1) convenant particulièrement bien à la présente invention sont des polyéthylènes oxydés émulsionnables dont le poids moléculaire moyen en poids peut être compris entre 900 et 25 000, et de préférence compris entre 1 200 et 8 000.

De préférence, pendant les étape (b) et (c), on prévoit une température de réaction supérieure d'environ 5 à 15°C par rapport à la température de ramollissement du polyéthylène oxydé (1) pour des facilités de mise en oeuvre.

De préférence encore, on maintient la température constante pendant l'étape (c). Cette dernière température peut être celle choisie dans l'étape (b).

La durée pendant laquelle on coule dans la phase homogène solvant-polyéthylène oxydé (1) fondu le mélange de monomères (2) cartalysés peut varier, selon le taux de modification par greffage du polyéthylène oxydé (1) et la nature des monomères choisis, entre par exemple 1 à 4 heures.

Au fur et à mesure que la réaction de polymérisation progresse, on observe que le polyéthylène oxydé (1), insoluble au départ dans le solvant choisi se solubilise jusqu'à l'obtention en fin de réaction d'une solution limpide. En effet, la réaction de polymérisation conforme à l'invention permet la formation de chaînes (méth)acryliques importantes sur le polyéthylène oxydé (1) par initiation de la polymérisation sur les radicaux libres formés sur la chaîne du polyéthylène sous l'influence de la température et du ou des catalyseurs, suivi par la propagation des chaînes.

Contrairement aux procédés connus, l'invention n'entraîne pas la formation d'homopolymères. Les résines obtenues conformément à l'invention sont diluables dans des solvants organiques et/ou les milieux aqueux et donnent des solutions limpides, sans traces de troubles causés par la présence d'homopolymères.

Parmi les monomères (2) convenant parfaitement pour la formation de chaînes latérales sur le polyéthylène oxydé (1), on peut citer les monomères méthacryliques et acryliques tels que l'acide (méth)acrylique, les esters (méth)acryliques, par exemple le (méth)acrylate de méthyle, le (méth)acrylate d'éthyle, le (méth)acrylate de butyle, le (méth)acrylate de 2-éthyle hexyle, les monomères (méth)acryliques hydroxylés tels que le (méth)acrylate de 2-hydroxyéthyle, le (méth)acrylate de 2-hydroxypropyle ; les monomères (méth)acryliques comprenant des groupes amino tels que le (méth)acrylate de N,N-diméthylaminoéthyle, le (méth)acrylate de N,N-diéthylaminoéthyle. Les autres monomères éthyléniques utilisables pour la préparation de la résine selon l'invention sont par exemples les monomères styréniques tels que le styrène, les méthylstyrènes ; les monomères vinyliques tels que l'acétate de vinyle.

Parmi les solvants (3) utilisables dans l'invention, on peut citer les glycols tels que l'éthylène-glycol, le propylène glycol ; les esters tels que l'acétate d'éthylglycol ; les éthers tels que le butylglycol ; les alcools supérieurs tels que le n-butanol, l'alcool benzylique ou encore les solvants aromatiques tels que le xylène, le toluène. On peut également utiliser comme solvant des composés organiques qui ont une température d'ébullition élevée ou des composés organiques solides à température ambiante. Ces composés doivent également être inertes vis-à-vis du milieu réactionnel et posséder une faible viscosité à la température de réaction. Il peut être en effet particulièrement intéressant d'utiliser comme solvant un composé peu volatil à température ambiante possédant des propriétés particulières dont il fera bénéficier les résines selon l'invention. Dans cette dernière catégorie de solvant, on peut citer des plastifiants tels que les phtalates, les adipates, les citrates ; les dérivés oxyéthylénés tels que l'alcool laurique oxyéthyléné, le nonylphénol contenant en moyenne 10 molécules d'oxyde d'éthylène (nom abrégé NP 10), le nonylphénol contenant en moyenne 30 molécules d'oxyde d'éthylène (nom abrégé NP 30) ou le nonylphénol contenant en moyenne 100 molécules d'oxyde d'éthylène (nom abrégé NP 100) ; des trialkylphosphates tels que le triméthylphosphate, le triéthylphosphate, le tributoxyéthylphosphate, qui donnent à la résine formulée une excellente résistance à la chaleur. On peut bien entendu également utiliser dans le procédé selon l'invention une combinaison de deux ou plusieurs des solvants cités ci-dessus.

Parmi les catalyseurs de polymérisation utilisables dans le procédé selon l'invention, on peut citer les peroxydes tels que le peroxyde de benzoyle, le peroxyde de ditertiobutyle, le peroxyde de lauryle ; les perbenzoates tels que le perbenzoate de tertiobutyle ; les hydroperoxydes tels que l'hydroperoxyde de cumène ; les composés diazoïques tels que le 2,2'-azobis(isobutyronitrile), le 2,2'-azobis (2-méthylbutyronitrile). Dans le procédé selon l'invention, on utilise généralement 1 à 4 % en poids de catalyseur par rapport au poids des monomères (2).

Ainsi, on peut préparer des solutions de résines selon l'invention contenant de 20 à 60 % en poids desdites résines avec des viscosités de 1 à 50 poises à température ambiante. Les résines selon l'invention, obtenues à partir d'environ 15 à 30 % de polyéthylène oxydé (1) et préparées dans des solvants du type plastifiant, à faibles tensions de vapeur à la température de réaction, sont utilisables en raison de leurs propriétés rhéologiques comme liant dans les adhésifs et les joints. Les liants selon l'invention sont résistants aux graisses et au jaunissement. Ils possèdent également l'avantage lors du séchage de ne présenter aucun phénomène de rétention des solvants. Pour cette raison, le séchage des liants selon l'invention, après leur application, peut être effectuées à des cadences supérieures à celles utilisées pour le séchage des liants classiques. Par exemple, dans le domaine des encres, les supports sur lesquels sont appliquées les formulations à base de résines selon l'invention peuvent défiler à des vitesses de l'ordre de 150 m/minute ou plus dans le dispositif de séchage (rampe de séchage, ventilation d'air chaud), au lieu des vitesses de 80 à 120 m/minute généralement utilisées. De plus, elles présentent des caractéristiques de rétention des solvants faibles, voire négligeables lors du séchage. Par ailleurs, les caractéristiques de surface des revêtements obtenus sont excellentes : le film est en effet lisse et possède un brillant parfait. Dans des opérations de stérilisation (systèmes réticulables à chaud), on constate une bonne tenue des revêtements à base de résines selon l'invention : on ne constate pas de décollement du revêtement.

Les exemples qui vont suivre, donnés à titre indicatif, permettront de mieux comprendre l'invention.

Dans ces différents exemples, les quantités de produits sont indiquées en parties en poids et les pourcentages sont des % en poids.

### EXEMPLE 1

Dans un réacteur équipé d'un dispositif d'agitation, on introduit 242 parties d'éthyl glycol et 80 parties d'un polyéthylène oxydé de dénomination commerciale A-C Polyéthylène 629 commercialisé par Allied Chemical. Ses caractéristiques sont les suivantes :

| | |
|---|---|
| - poids moléculaire moyen en poids | 1750 |
| - densité | 0,93 |
| - indice d'acide | 15 |
| - point de ramollissement (°C) | 104 |
| - viscosité à 140°C (cps) | 200 |

La température est ensuite portée à 125°C et le mélange réactionnel est laissé sous agitation pendant 15 minutes. On obtient alors une dispersion homogène du polyéthylène oxydé dans l'éthylglycol.

On introduit ensuite en continu et en trois heures dans la dispersion homogène le mélange suivant :

| | |
|---|---|
| - styrène | 265 |
| - acrylate de butyle | 331 |
| - acide méthacrylique | 65 |
| - peroxyde de ditertiobutyle | 16 |

Pendant cette addition, la température est élevée et maintenue à 130°C.

On laisse la réaction se poursuivre ensuite pendant 1h30.

En fin de réaction, le mélange réactionnel se présente à chaud sous l'aspect d'une solution transparente à reflets bleutés. La viscosité de cette solution est de 15 poises. Après refroidissement, on obtient une masse opaque "caoutchouteuse" et très faiblement collante.

Le produit obtenu présente les caractéristiques suivantes :

| | |
|---|---|
| - extrait sec (en %) | 76 |
| - indice d'acide | 54 |
| - quantité de polyéthylène dans l'extrait sec (en %) | 10,3 |

Ce produit est soluble dans l'acétate d'éthyle, l'acétate de méthyle, l'éthylglycol, le butylglycol. Il est, par contre, insoluble dans l'éthanol.

### Applications de la solution à 76 % d'extrait sec préparé ci-dessus

**1)** On dilue la solution obtenue précédemment avec de l'acétate d'éthyle de manière à préparer une solution à 50 % d'extrait sec. Cette dernière solution utilisée dans des formulations de vernis et d'encres nitrocellulosiques donne des films présentant d'excellentes qualités de séchage et de brillance. En effet, le séchage peut être effectué en faisant défiler le produit sur lequel a été appliqué la formulation à une vitesse de 150 m/minute. On constate également une amélioration des propriétés vis-à-vis des pigments à savoir une meilleure intensité et un meilleur rendement de broyage.
**2)** A 138,4 parties du produit obtenu (à 76% d'extrait sec) on ajoute une solution composée de 40 parties de diméthylaminoéthanol et 84,2 parties d'eau distillée. Après 15 minutes de mélange, on obtient une solution transparente et bleutée, à 40% d'extrait sec. La viscosité de ce mélange est élevée et supérieure à 100 poises.
   Après dilution à l'aide de 262,6 parties d'eau distillée, l'extrait sec ne représente plus que 20% en poids de cette solution, on obtient une solution possédant une viscosité égale à 2 poises donc satisfaisante pour être forumulée dans les vernis et revêtements pigmentés.
   En conclusion, on peut dire que la dilution du polyéthylène greffé préparé dans l'exemple 1, d'une part dans l'acétate d'éthyle, et d'autre part en milieu aqueux à des % d'extraits secs faibles, montre que le polyéthylène greffé est parfaitement diluable.

### EXEMPLE 2

Dans cet exemple, on reprend le mode opératoire décrit dans l'exemple 1 : la nature et la quantité des réactifs sont conservées, la seule différence résidant dans le fait que le solvant est à présent un plastifiant à savoir le tributoxyéthylphosphate en non l'éthylglycol. Les quantités prescrites dans l'exemple 1 sont conservées. On utilise 242 parties de ce solvant.

Après réaction, on obtient un produit ayant l'aspect d'une masse "caoutchouteuse" à froid. Par contre ce produit à chaud est fluide, il possède un indice d'acide égal à 54.

Ce produit possède d'excellentes qualités pour être formulé dans des compositions d'adhésifs, de joints.

### EXEMPLE 3

Comme dans l'exemple 2, on reprend le mode opératoire suivi dans l'exemple 1 : la nature et les quantités des réactifs utilisés sont identiques, la seule différence résidant dans le fait que le solvant utilisé est le NP 30 (température de fusion = 40°C) à raison de 242 parties. En fin de réaction, le produit est vidangé en masse. Après refroidissement, on obtient un produit solide dont la zone de fusion est de 45-55°C. Ce produit est particulièrement intéressant dans le domaine des joints.

### EXEMPLE 4

Dans un appareillage identique à celui utilisé dans l'exemple 1, on introduit sous agitation 250 parties d'éthylglycol et 40 parties d'un polyéthylène oxydé de dénommination commerciale A-C Polyéthylène 680 commercialisé par Allied Chemical. Ses caractéristiques sont les suivantes :

| | |
|---|---|
| - poids moléculaire moyen en poids | 1850 |
| - densité | 0,94 |
| - indice d'acide | 16 |
| - point de ramollissement (en °C) | 110 |
| - viscosité à 140°C (en cps) | 250 |

La température est portée à 125°C. Dès l'obtention d'une phase homogène, on introduit en continu pendant 3 heures dans le réacteur la charge suivante :

| | |
|---|---|
| - méthacrylate de méthyle | 235 |
| - acrylate de butyle | 308 |
| - acide méthacrylique | 53 |
| - 2,2'-azobis isobutyronitrile | 12 |

Pendant cet ajout, la température est élevée et maintenue à 130°C.

Ensuite, la température est maintenue à 125-130°C. Après 1h30 de réaction comptée à partir de la fin de l'addition des monomères, la réaction est arrêtée. Le produit obtenu est alors dilué à l'aide de 100 parties de méthylglycol. Le produit final est une solution tranparente et bleutée qui possède les caractéristiques suivantes :

| | |
|---|---|
| - extrait sec | 65 |
| - indice d'acide | 53 |
| - teneur en polyéthylène dans l'extrait sec (en %) | 6,15 |

La solution à 65% d'extrait sec obtenue ci-dessus est apliquée à la racle sur papier kraft. La surface du film obtenu est lisse et brillante et possède une bonne résistance à l'eau et aux graisses.

### EXEMPLE 5

Dans l'appareillage et les conditions opératoires décrites dans l'exemple 1, on mélange tout d'abord :

| | |
|---|---|
| - éthylglycol | 247 |
| - A-C polyéthylène 680 (voir ex. 4) | 68 |

Ensuite sous agitation, la température du mélange réactionnel étant portée à 130°C, on introduit la charge suivante (en parties en poids) :

| | |
|---|---|
| - styrène | 273 |
| - acrylate de butyle | 333 |
| - acide méthacrylique | 65 |
| - peroxyde de ditertiobutyle | 13 |
| - azobisisobutyronitrile | 1 |

Le produit obtenu à froid est un produit d'aspect "cireux" facilement manipulable. Ses caractéristiques sont les suivantes :

| | |
|---|---|
| - extrait sec (en %) | 75,5 |
| - teneur en polyéthylène dans l'extrait sec (en %) | 9 |
| - indice d'acide | 57 |

### Exemples d'applications du produit préparé dans l'exemple 5

### 1) Préparation d'un vernis

. à 100 parties du produit obtenu précédemment (à 75,5% d'extrait sec) on ajoute 14 parties d'une solution d'alkyde d'uréthane, de dénommination commerciale SYNRESIN U51 W60 commercialisé par DSM, à 60% dans le white spirit. On obtient un mélange parfaitement compatible et stable utilisable dans une formulation classique de vernis. Le mélange ainsi préparé, après séchage présente d'excellentes propriétés d'adhérence, de dureté et de brillant. L'étalement du film est également très bon.
. à 630 parties du produit préparé précédemment (à 75,5 % en poids d'extrait sec), on ajoute 147 parties d'une solution à 60% en poids dans le white spirit d'alkyde uréthane SYNRESIN U51 W60 et 90,5 parties d'acétate de butyle. Le produit obtenu possède un extrait sec de 65% en poids. Ce produit appliqué à la racle sur papier après séchage 5 minutes à l'air et 5 minutes à 80°C donne un film sec, brillant et lisse.

### 2) Préparation d'une encre Nitrocellulosique

On prépare le mélange suivant (en parties) :

| | |
|---|---|
| - pigment : bleu de phtalocyanine | 12,50 |
| - dioctylphtalate | 3,75 |
| - nitrocellulose 1/2 seconde | 8,75 |
| - acétate d'éthyle | 45 |
| - produit à 75,5% d'extrait sec tel | |
| que préparé dans l'exemple 5 | 21 |
| - alkyde uréthane SYNRESIN U51W60 | 9 |

Le produit final obtenu, après broyage du pigment, présente un extrait sec de 46,2% en poids. Il donne après séchage un film lisse et brillant.

### 3) Préparation d'un vernis pour résines à base de nitrocellulose

A 100 parties du produit préparé dans l'exemple 5, on ajoute 15 parties d'un plastifiant de dénommination commerciale Santholite MHP commercialisé par Mosanto et 51 parties d'acétate d'éthyle.

On obtient une solution à 50% d'extrait sec. Ensuite on ajoute à 45,75 parties de cette solution, une dispersion constituée de :

| | |
|---|---|
| - pigment : bleu de phtalocyanine | 12,50 |
| - nitrocellulose 1/2 seconde | 8,75 |
| - acétate d'éthyle | 33 |

Après mélange on obtient une encre nitrocellulosique possédant de bonnes caractéristiques de brillance et de dureté.

### 4) Préparation d'une solution aqueuse

A 930 parties du produit préparé dans l'exemple 5, on ajoute 270 parties de diméthylaminoéthanol et 208 parties d'eau distillée.

On obtient une solution stable à 50% d'extrait sec.
A nouveau diluée avec de l'eau distillée de manière à ne contenir que 20% en poids d'extrait sec, on obtient une solution de consistance crémeuse.

Cette dernière solution appliquée sur papier à la racle donne un film brillant et résistant à l'eau et aux graisses.

### 5) Préparation d'un vernis de surimpression pour papier

A 139,5 parties du produit préparé dans l'exemple 5, on ajoute 40 parties d'isopropanol, 40,5 parties de diméthylaminoéthanol et 43,2 parties d'eau distillée. On obtient une solution à 40% d'extrait sec. Cette solution est ensuite diluée avec de l'eau ou un mélange eau alcool de manière à obtenir une viscosité de 20 à 25 secondes à la coupe AFNOR N° 4. On applique cette solution à l'aide d'une machine flexo ou hélio sur papier après impression d'encre. Le papier ainsi surimpressionné possède une meilleure résistance à l'eau.

### EXEMPLE 6

Dans un appareillage identique à celui de l'exemple 1, on introduit sous agitation 350 parties de butylglycol et 30 parties de polyéthylène oxydé de dénommination commerciale AC-Polyéthylène-392 et vendu par Allied Chemical. Les caractéristiques de ce polyéthylène sont les suivantes :

| | |
|---|---|
| - poids moléculaire moyen en poids | 8000 |
| - densité | 0,99 |
| - indice d'acide | 28 |
| - point de ramollissement (en °C) | 138 |
| - viscosité à 140°C (en cps) | 15000 |

La température du mélange est portée à 145°C.

Dès l'obtention d'une phase homogène, on introduit en continu pendant environ 3 heures le mélange suivant :

| | |
|---|---|
| - styrène | 240 |
| - acrylate de butyle | 313 |
| - acide méthacrylique | 53 |
| - peroxyde de ditertiobutyle | 13 |

Pendant cette addition, la température du mélange réactionnel est maintenue à 140-145°C.

Ensuite, la réaction est poursuivie pendant 1h30 à environ 140°C.

En fin de réaction, on obtient une solution limpide à chaud qui prend à froid l'aspect d'un gel mou facilement applicable à la racle.

Le film ainsi obtenu est très résistant à l'humidité et aux graisses.

### EXEMPLE 7

Dans un appareillage identique à celui utilisé dans l'exemple 1, on introduit 1126 parties d'acétate d'éthylglycol et 344 parties de AC-polyéthylène-629 (utilisé dans l'exemple 1).

Le mélange est chauffé à 130°C. Ensuite on introduit en continu pendant environ 3 heures le mélange suivant :

| | |
|---|---|
| - styrène | 908 |
| - méthacrylate de 2-hydroxyéthyle | 356 |
| - acrylate de butyle | 908 |
| - acide méthacrylique | 52 |
| - peroxyde de ditertiobutyle | 53 |

Ensuite, après cette addition, la température est maintenue à 130-135°C pendant 1h30 pour compléter la polymérisation.

En fin de réaction, le produit obtenu est dilué avec 289 parties d'acétate d'éthylglycol.

On obtient finalement une solution à 65% d'extrait sec, ce dernier comportant 13% de polyéthylène.

A froid, ce produit a l'aspect d'un gel translucide et thixotrope.

### Application de la solution à 65% d'extrait sec préparé ci-dessus

### Préparation d'une peinture à extrait sec élevé pour application sur des surfaces verticales à l'aide par exemple d'un pistolet à disque à grande vitesse

On prépare la formule suivante (en parties en poids) :

| | |
|---|---|
| -produit préparé dans cet exemple à 65% en poids d'extrait sec | 100 |
| - mélamine-formol masse de dénommination commerciale CYMEL 325 et commercialisé par Cyanamid | 16,25 |
| - oxyde de titane | 65,10 |
| - acétate d'éthylglycol | 1,60 |

La formule obtenue possède un extrait sec total de 80%. Le rapport en poids acrylique sur mélamine est de 80/20.

Après application comme indiquée ci-dessus et étuvage à 120-130°C pendant 15 à 30 minutes, on obtient un revêtement possédant les caractéristiques suivantes

| | |
|---|---|
| - épaisseur du film | 25 microns |
| - dureté PERSOZ | 235 - 240 secondes |
| - résistance au choc (poids de 1kg) | 50 cm |
| - flexibilité(embouti ERIKSEN) | 8,5 cm |
| - pliage(à l'aide de mandrin conique) | bon pour un diamètre de 10 cm |
| - test du quadrillage | pas de décollement |

### EXEMPLE 8 (Test comparatif en l'absence de catalyseur de polymérisation)

Dans un réacteur équipé d'un dispositif d'agitation, on introduit 490 parties d'éthyl glycol et 136 parties d'un polyéthylène oxydé de dénomination commerciale A-C polyéthylène 680 commercialisé par Allied Chemical. Ses caractéristiques sont les suivantes :

| | |
|---|---|
| - poids moléculaire moyen en poids | 1850 |
| - densité | 0,94 |
| - indice d'acide | 16 |
| - point de ramollissement (°C) | 110 |
| - visocosité à 140°C (cps) | 250 |

La température est ensuite portée à 125°C et le mélange réactionnel est laissé sous agitation pendant 15 minutes. On obtient une dispersion. On introduit ensuite, en continu et en 3 heures, dans la dispersion le mélange suivant :

| | |
|---|---|
| - styrène | 545 |
| - acrylate de Butyle | 665 |
| - acide méthacrylique | 131 |

La température est maintenue pendant l'introduction du mélange des monomères à 125° - 135°C.

On laisse la réaction se poursuivre ensuite pendant 1h.30.

En fin de réaction, le produit obtenu est vidangé en masse : il a l'aspect d'une cire blanche opaque et il présente les caractéristiques suivantes :

| | |
|---|---|
| - quantité de polyéthylène dans l'extrait sec (en %) | 9,2 |
| - extrait sec (en %) | 75 |
| - indice d'acide | 57 |

### Essai de préparation d'une solution aqueuse

A 100 parties de la cire obtenue dans cet exemple, on ajoute 260 parties d'eau distillée et 15 parties de diméthylaminoéthanol, puis on porte ce mélange à 40°C. Il est impossible d'obtenir un mélange homogène.

Après refroidissement, le mélange se sépare en deux parties : une masse blanche et une phase aqueuse limpide.

### EXEMPLE 9 (test comparatif)

L'exemple 9 est identique à l'exemple 8, excepté que dans le mélange constitué d'éthyl glycol et du polyéthylène oxydé, on introduit 2 parties de 2,2'-azo bis (isobutyronitrile).

En fin de réaction, le produit obtenu se présente sous l'aspect d'une cire blanchâtre translucide.

Cette cire mélangée à de l'eau distillée et à du diméthylaminoéthanol dans les conditions décrites dans l'exemple 8 ne donne pas un mélange homogène. Après évaporation, on obtient une cire molle cristalline et hydroscopique.

### EXEMPLE 10

Les conditions et les produits utilisés dans cet exemple sont identiques à ceux de l'exemple 8, excepté que :
- le mélange constitué d'éthyle glycol et de polyéthylène oxydé comporte également 2 parties de 2, 2'-azobis (isobutyronitrile)
- le mélange des monomères comporte également 26,8 parties de peroxydes de dibutyle tertiaire (soit 2 % du mélange de monomères)
En fin de réaction, on obtient une cire molle translucide.

La reproduction de l'essai de préparation d'une solution aqueuse, telle que décrite dans l'exemple 8, avec cette cire permet l'obtention d'une solution homogène blanchâtre et translucide qui a les caractéristiques suivantes :

| | |
|---|---|
| - extrait sec (en %) | 20 |
| - pH | 9,5 |

Ce produit est parfaitement diluable à l'eau.

### EXEMPLE 11

Le mode opératoire suivi dans cet exemple, la nature et les quantités des produits chimiques utilisés dans ces exemple sont identiques à ceux de l'exemple 10, excepté la nature du polyéthylène oxydé choisi qui est dans cet exemple une cire molle de dénomination commerciale COPOL-A commercialisée par CdF Chimie et dont les caractéristiques sont les suivantes :

| | |
|---|---|
| - poids moléculaire moyen en poids | 2600 |
| - cristallinité (en %) | 10 |
| - viscosité à 140°C (en poises) | 0,6 |
| - température de fusion (en °C) | 90-97 |

En fin de réaction, on obtient un produit dont les caractéristiques sont les suivantes :

| | |
|---|---|
| - aspect | visqueux, transparent et applicable à la racle |
| - extrait sec (en %) | 75 |
| - donne des films lisses et très brillants. | |

### Préparation d'une solution aqueuse

A 100 parties de cette cire, on ajoute 15 parties de diméthylaminoéthanol et 85 parties d'eau distillée.

On obtient une solution homogène à 50 % d'extrait sec. Cette solution est diluable à l'eau.

### Essais de dilution (1) et (2)

1. A 80 parties de la solution à 50 % d'extrait sec, on ajoute 34,3parties d'eau distillée. On obtient une solution crémeuse blanchâtre et lisse applicable à la racle.
2. A 80 parties de la solution à 50 % d'extrait sec, on ajoute 17,3 parties d'eau distillée et 17 parties d'isopropanol. On obtient une solution translucide à 35 % d'extrait sec et de viscosité égale à 7200 cps.

## Revendications

1. Utilisation de résines thermoplastiques ou thermodurcissables, solubles dans des solvants organiques et/ou les milieux aqueux, constituées par du polyéthylène greffé obtenu à partir de :
(a) 0,5 à 30% en poids d'au moins un polyéthylène oxydé, par rapport à la résine préparée, ledit polyéthylène oxydé ayant un poids moléculaire moyen en poids compris entre 900 et 25 000 et possédant des groupements latéraux termine's par des groupements fonctionnels susceptibles de donner naissance à des radicaux libres; et
(b) 70 à 99,5% en poids d'au moins un monomère acrylique et/ou méthacrylique, et, le cas échéant, d'au moins un autre monomère éthylénique,
comme liants dans des peintures, vernis, encres, colles, adhésifs et joints.

2. Utilisation selon la revendication 1, caractérisée par le fait que le polyéthylène oxydé possède un poids moléculaire moyen en poids compris entre 1200 et 8000.

3. Utilisation selon l'une des revendications 1 et 2, caractérisée par le fait que le polyéthylène greffé a été obtenu par dispersion du (ou des) polyéthylène(s) oxydé(s) sous forme de poudre ou de granulés dans au moins un solvant organique présentant une température d'ébullition supérieure à la zone de ramollissement du ou des polyéthylènes oxydés ; chauffage sous agitation de la dispersion ainsi obtenue à une température supérieure à la température de ramollissement du ou des polyéthylènes oxydés ; puis ajout progressif du (ou des) monomère(s) catalysé(s) constitué(s) par le (ou les) monomère(s) (méth)acrylique(s) et, le cas échéant, le (ou les) autre(s) monomère(s) éthylénique(s), dans la phase homogène solvant-polyoxyéthylène oxydé fondu jusqu'à l'obtention de la résine.

4. Utilisation selon l'une des revendications 1 à 3, caractérisée par le fait que les résines formant les liants sont mises en oeuvre sous la forme de solutions contenant de 20 à 60% en poids desdites résines et ayant des viscosités de 1 à 50 poises à température ambiante.

5. Utilisation selon l'une des revendications 1 à 3, caractérisée par le fait que les résines formant des liants dans les adhésifs et les joints sont des résines obtenues à partir de 15 à 30% en poids de polyéthylène oxydé, dans des solvants à faible tension de vapeur à la température de réaction, c'est-à-dire des solvants du type plastifiant.

## Claims

1. Use of thermoplastic or heat-curable resins soluble in organic solvents and/or aqueous media, consisting of grafted polyethylene obtained from:
(a) 0.5 to 30 % by weight of at least one oxidised polyethylene, in relation to the prepared resin, the said oxidised polyethylene having a weight-average molecular weight of between 900 and 25,000 and containing side groups ending in functional groups capable of giving rise to free radicals; and
(b) 70 to 99.5 % by weight of at least one acrylic and/or methacrylic monomer and, if appropriate, at least one other ethylenic monomer,
as vehicles in paints, varnishes, inks, glues, adhesives and seals.

2. Use according to Claim 1, characterised in that the oxidised polyethylene has a weight-average molecular weight of between 1200 and 8000.

3. Use according to one of Claims 1 and 2, characterised in that the grafted polyethylene has been obtained by dispersion of the oxidised polyethylene(s) in the form of powder or granules in at least one organic solvent exhibiting a boiling temperature higher than the softening range of the oxidised polyethylene(s); heating the dispersion thus obtained with stirring to a temperature above the softening temperature of the oxidised polyethylene(s); then gradual addition of the catalysed monomer(s) consisting of the (meth)acrylic monomer(s) and, if appropriate, the other ethylenic monomer(s), to the homogeneous solvent-molten oxidised polyoxyethylene phase until the resin is obtained.

4. Use according to one of Claims 1 to 3, characterised in that the resins forming the vehicles are used in the form of solutions containing from 20 to 60 % by weight of the said resins and having viscosities of 1 to 50 poises at room temperature.

5. Use according to one of Claims 1 to 3, characterised in that the resins forming the vehicles in the adhesives and the seals are resins obtained from 15 to 30 % by weight of oxidised polyethylene, in solvents of low vapour pressure at the reaction temperature, that is to say solvents of the plasticiser type.

## Patentansprüche

1. Verwendung von thermoplastischen oder wärmehärtbaren Kunstharzen, die in organischen Lösungsmitteln und/oder in wäßrigem Milieu löslich sind und aus gepfropftem Polyethylen bestehen, das ausgehend von:
(a) 0,5 bis 30 Gew.%, bezogen auf das hergestellte Harz, mindestens eines oxidierten Polyethylens, das ein mittleres Molekulargewicht zwischen 900 und 25000 besitzt und Seitengruppen enthält, die durch funktionellen Gruppen endet sind, die freie Radikale bilden können, und
(b) 70 bis 99,5 Gew.% mindestens eines Acryl- oder Methacryl-Monomeren und, nötigenfalls, mindestens eines weiteren Ethylen-Monomeren
erhalten wurde, als Bindemittel in Farben, Lacken, Tinten, Klebstoffen, Haftklebern und Dichtungsmaterialien.

2. Verwendung nach Anspruch 1, gekennzeichnet durch die Tatsache, daß das oxidierte Polyethylen ein mittleres Molekulargewicht zwischen 1200 und 8000 besitzt.

3. Verwendung nach einem der Ansprüche 1 und 2, dadurch gekennzeichnet, daß das gepfropfte Polyethylen durch
- Dispersion des oxidierten Polyethylens oder der oxidierten Polyethylene in Pulver- oder Granulatform in mindestens einem organischen Lösungsmittel, das einen Siedepunkt besitzt, der höher liegt als die Erweichungszone des oder der oxidierten Polyethylene,
- Erhitzen der so erhaltenen Dispersion auf eine Temperatur oberhalb der Erweichungszone des oder der oxidierten Polyethylene unter Rühren und
- anschließende portionsweise Zugabe des oder der Monomere, bestehend aus dem oder den (Meth)-Acryl-Monomeren und, nötigenfalls, dem oder den Ethylen-Monomeren, unter Zusatz eines Katalysators zu der homogenen Phase aus Lösungsmittel und geschmolzenem oxidierten Polyoxethylen bis zum Erhalt des Harzes erhalten wurde.

4. Verwendung nach einem der Ansprüche 1 bis 3, dadurch gekennzeichnet, daß die Harze, die Bindemittel bilden, in Form von Lösungen eingesetzt werden, die 20 bis 60 Gew.% besagter Harze enthalten und bei Raumtemperatur eine Viskosität zwischen 1 und 50 Poise besitzen.

5. Verwendung nach einem der Ansprüche 1 bis 3, dadurch gekennzeichnet, daß die Harze, die Bindemittel für Haftkleber und Dichtungsmaterialien bilden, Harze sind, die ausgehend von 15 bis 30 Gew.% oxidiertem Polyethylen in Lösungsmitteln, die bei der Reaktionstemperatur einen niedrigen Dampfdruck besitzen, das heißt plastifizierenden Lösungsmitteln, erhalten wurden.
